# EUROPÄISCHE PATENTSCHRIFT

(11) **EP 2 316 662 B1**
(45) Veröffentlichungstag und Bekanntmachung des Hinweises auf die Patenterteilung: **20.02.2013**
(21) Anmeldenummer: 10004832.1
(22) Anmeldetag: 07.05.2010
(51) Int. Cl.: B44C 5/04, B30B 15/06

(54) **Werkstoffplatte mit Dekorschicht und Prägung**
Material board with decorative layer and stamp
Plaque d'agent actif dotée d'une couche décorative et d'une imprégnation

(30) Priorität: 30.10.2009 DE 202009014669 U
(43) Veröffentlichungstag der Anmeldung: 04.05.2011
(73) Patentinhaber: Hueck Rheinische GmbH, 41747 Viersen (DE)
(72) Erfinder: Niedermaier, Thomas, 32130 Enger (DE)
(74) Vertreter: Demski, Siegfried

(56) Entgegenhaltungen:
- EP-A1- 0 095 046
- DD-A1- 204 225

## Beschreibung

Die Erfindung betrifft eineWerkstoffplatte, insbesondere zur Herstellung von Möbeln aufweisend zumindest eine mittlere Substratschicht und eine Dekorschicht auf wenigstens einer Seite der Substratschicht sowie ein Pressblech zur Herstellung der Werkstoffplatte.

Werkstoffplatten der gattungsgemäßen Art werden hauptsächlich zur Herstellung von Möbeln, Türelementen oder Fußbodenpanellen verwendet. Zur Herstellung der Werkstoffplatten wird ein faserartiges Material verwendet, welches zumindest einseitig, vorzugsweise beidseitig mit mehreren Schichten belegt wird, um in einer Presse miteinander verbunden zu werden. Aus diesem Grunde sind die Schichten mit einem Aminoharz, zum Beispiel Melaminformaldehyd-Harz getränkt, sodass beim Pressen unter gleichzeitiger Hitzeeinwirkung die Aminoharzschicht aushärten kann und eine Verbindung der einzelnen Lagen mit der Substratschicht hergestellt wird. Die hierbei verwendeten Schichten bestehen zumindest aus einer Dekorschicht und einer Overlayschicht. Die Dekorschicht kann aus einem graphischen Muster oder der Nachbildung einer natürlichen Holzoberfläche oder Gesteinsoberfläche bestehen.

Bevorzugt werden die Werkstoffplatten zur Herstellung von Möbeln verwendet, wobei es darauf ankommt, dass das gewählte Muster, vorzugsweise eine Holzmaserung, möglichst naturgetreu wiedergegeben wird. Aus diesem Grunde werden Pressbleche verwendet, die einen Negativabdruck der zu verpressenden Werkstoffplatten aufweisen. Somit kann bei dem Pressvorgang die Struktur des Pressbleches auf die obere Deckschicht der Substratschicht übertragen werden. Hierzu werden in der Regel große Pressbleche in einem Format von 2,3 x 6 m verwendet, um großformatige Werkstoffplatten herzustellen, die anschließend in der Möbelindustrie für den jeweiligen Verwendungszweck zugeschnitten werden können.

Die Ansprüche an derartige Werkstoffplatten seitens der Kunden steigen kontinuierlich, wobei immer wieder im Vordergrund steht, dass die Oberflächengestaltung einem natürlichen Furnier möglichst nahekommt. Um die Kundenwünsche in dieser Richtung ausreichend zu berücksichtigen sind daher weitere Verbesserungen der Werkstoffplatten erforderlich.

Aus der EP 0 095 046 ist ein Verfahren zur Herstellung eines Dekorkunststoffes zum Beschichten von Trägermaterialien bekannt. Hierzu wird ein Dekorkunststoff verwendet, welcher mit einer reliefartig geprägten Oberfläche ausgestattet ist, die aus einem mit harz getränkten Overlay-Papier besteht und wobei das Overlay-Papier mit einem Druckmuster bedruckt ist und die reliefartig Oberfläche eine dem Druckmuster konforme Gestaltung aufweist.

Aus der DD 204 225 ist eine Pressplatte für Press- und Sintervorrichtungen bekannt. Diese Pressplatte ist zum Zerkleinern von Kunststoffmaterialien vorgesehen, um eine höhere Schüttdichte des Granulats zu erhalten. Die Pressplatte selbst ist mit einem nahezu quadratischen Muster ausgestattet, wobei die Trennungslinien scharfkantig ausgebildet sind, damit die erforderlich Zerkleinerung der Kunststoffmaterialien vorgenommen werden kann.

Der vorliegenden Erfindung liegt die Aufgabe zugrunde, eine Werkstoffplatte aufzuzeigen, welche einen weiterhin erhöhten Qualitätsstandard aufweist.

Zur Lösung der Aufgabe ist vorgesehen, dass zu beiden Seiten der herzustellenden Werkstoffplatte eine Dekorschicht angeordnet und eine passagenaue Prägung vorhanden ist, wobei die Strukturen zu beiden Seiten der Werkstoffplatte deckungsgenau ausgebildet sind. Weitere vorteilhafte Ausgestaltungen der Erfindung ergeben sich aus den Unteransprüchen.

Unter einer passagenauen Prägung wird eine besondere Prägung verstanden, bei der das Muster der Dekorschicht, beispielsweise einer Holzmaserung, mit der geprägten Struktur des Pressbleches übereinstimmt. Somit können die Holzporen durch entsprechende Tiefenprägung besonders herausgestellt werden, sodass insgesamt der Eindruck entsteht, es handelt sich um natürliches Holz, wobei im Weiteren durch die vorhandene Prägung eine Haptik entsteht, die bei dem Betrachter, insbesondere beim Abtasten den Eindruck eines natürlichen Holzwerkstoffes entstehen lässt.

Im vorliegenden Fall werden die Werkstoffplatten hauptsächlich zur Herstellung von Möbeln verwendet, welche, sofern es sich nicht um offene Regalwände handelt, mit Türelementen ausgestattet sind, die über Scharniere schwenkbeweglich gelagert werden. Somit kann der Eindruck einer Werkstoffplatte hinsichtlich einer weiteren Qualitätssteigerung dadurch verbessert werden,das zu beiden Seiten der Werkstoffplatte eine deckungsgenaue Ausbildung der Struktur vorliegt. Unter deckungsgenau wird in diesem Zusammenhang verstanden, dass sich die Holzmaserungen der Vorderseite auf der Rückseite wiederspiegeln. Hierdurch kann ein Eindruck erzielt werden, als ob es sich um ein massives Hölzbrett handelt, dessen Maserung sowohl auf der Vorderseite als auch auf der Rückseite deckungsgenau ausgebildet ist. Somit kann beispielsweise eine besonders stark hervortretende Holzmaserung, falls gewünscht auch ein einzelnes Astloch genau in der gleichen Positionshöhe auf der Rückseite ausgebildet sein, sodass für den Betrachter der Eindruck entsteht, die Werkstoffplatte besteht aus einem Massivholzstück. Gleiches gilt für andere Möbelteile, beispielsweise Seitenwangen einer Schrankwand etc..

Zur Herstellung der Werkstoffplatte wird hierbei eine Dekorschicht verwendet, welche zumindest aus einem Dekorpapier und einer Prägung auf der Vorder- und Rückseite der Werkstoffplatte besteht. Zu diesem Zweck werden Pressen verwendet, welche sowohl eine Prägung auf der Vorder- als auch auf der Rückseite der Werkstoffplatte vornehmen können, wobei die verwendeten Pressbleche ebenfalls eine deckungsgenaue Negativstruktur der herzustellen den Oberftäche aufweisen. Durch die Übereinstimmung der Pressbfechstruktur den Oberfläche aufweisen, Durch die Übereinstimmung der Pressblechstruktur mit dem Dekorpapier wird der Eindruck einer natürlichen Holzmaserung oder einer sonstigen Oberflächengestaltung mit entsprechend erhabenen und tiefer liegenden Bereichen hergestellt.

In besonderer Ausgestaltung der Erfindung ist vorgesehen, dass das Dekorpapier und die Prägung von der Mitte ausgehend zur Längs- und/oder Querrichtung eine symmetrische Struktur aufweisen. Bei der Festlegung und Auswahl der Dekorpapiere beziehungsweise deren Herstellung wird durch eine symmetrische Struktur, welche von der Mitte ausgehend sowohl zur Längs- als auch zur Querrichtung ausgebildet sein kann, eine besonders einfache Weiterverarbeitung gewährleistet. Die hierzu passgenau hergestellten Pressbleche weisen ebenfalls eine solche Struktur auf, sodass der besondere Vorteil entsteht, dass die Pressbleche unabhängig von ihrer Lage sowohl als unteres oder oberes Pressblech in einer Presse eingesetzt werden können, wobei es im Weiteren noch nicht einmal darauf ankommt, ob eine Verdrehung der Pressbleche in der Lageebene gegeneinander vorliegt oder nicht. Dies wird jedoch nur dann erreicht, wenn von der Mitte ausgehend sowohl zur Längs- als auch zur Querrichtung eine symmetrische Struktur ausgebildet ist. Soweit die Strukturausbildung sich nur symmetrisch zur Längs- oder Querrichtung erstreckt, wäre bei einem Einbau der Pressbleche darauf zu achten, dass die deckungsgenaue Prägung gewährleistet ist. Zu diesem Zweck werden beide Seiten der Werkstoffplatte mit einer Dekorschicht belegt und einem Pressblech bearbeitet. Zur Verbindung der einzelnen Schichten mit der Substratschicht ist hierbei vorgesehen, dass zwischen der Substratschicht oder der Dekorschicht zumindest auf einer Seite, vorzugsweise auf beiden Seiten, eine Leimschicht angeordnet ist, die in der Regel aus einem Aminoharz besteht oder die Dekorschicht bereits mit dem Aminoharz getränkt ist, welches durch Erwärmung aushärtet und somit eine dauerhafte Verbindung zwischen der Dekorschicht und der Substratschicht herstellt.

Um besonders tiefe Strukturen prägen zu können werden vorzugsweise zwischen der Substratschicht und der Dekorschicht ein oder mehrere Underlay-Schichten eingefügt, die beispielsweise aus harzgetränktem Kraftpapier oder harzgetränktem Glasfließgewebe bestehen können. Somit besteht die Möglichkeit besonders tiefe Strukturen zu prägen, ohne dass die Substratschicht mitgeprägt werden muss.

Um besonders hochwertige Oberflächen zu erzielen, weiche auch gegenüber herkömmlichen Reinigungsmitteln resistent sind, ist ferner vorgesehen, dass auf beiden Seiten der Werkstoffplatte zumindest eine Schichtenfolge Overlayschicht, Dekorschicht vorgesehen ist. Mit Hilfe der Overlayschicht, welche in der Regel transparent ausgeführt ist, wird die empfindliche Dekorschicht letztlich letztlich geschützt, wobei auch die Overlayschicht mit einer Leimschicht, das heißt mit einem Aminoharz getränkt sein kann, sodass eine dauerhafte Verbindung zwischen Overlayschicht, Dekorschicht sowie Dekorschicht und Substratschicht herstellbar ist.

Soweit eine hohe Abriebfestigkeit der hergestellten Oberflächen der Werkstoffplatten gewünscht wird, können im Weiteren die Dekorschichten und/oder Overlayschichten mit abriebfesten Partikeln angereichert sein. Als abriebfeste Partikel kommt im Wesentlichen Korund infrage, jedoch kann auch bereits abgebundenes Melamin oder Glas in einer der oberen Schichten eingebracht werden, um somit die Schicht abriebfester und stabiler gegen Abnutzung zu gestalten.

Als Substratschicht können grundsätzlich faser- oder spanhaltigen Materialien verwendet werden, wie MDF, HDF, Span, OSB oder Sperrholz. Hier kommt es auf die gewünschte Qualität und Festigkeit der Werkstoffplatte an, um diese beispielsweise als Holzwerkstoffplatte für die Möbelindustrie einsetzen zu können.

Im Weiteren liegt der vorliegenden Erfindung die Aufgabe zugrunde, ein neuartiges Pressblech aufzuzeigen, welches zur Herstellung der Werkstoffplatten eingesetzt werden kann. Um die Handhabung der Pressbleche während des Pressvorgangs und insbesondere bei der Montage so einfach wie möglich zu gestalten und eine deckungsgenaue Prägung der Werkstoffplatten sowohl auf der Oberseite als auch auf der Rückseite zu gewährleisten ist hierbei vorgesehen, dass das Pressblech entlang seiner Längsmittelachse und Quermittelachse eine in die Quadranten gespiegelte Oberflächenstruktur in Form einer Holzmaserung oder Gesteinsoberfläche aufweist, wobei ein Negativabdruck zur Prägung einer Oberfläche der Werkstoffplatte vorliegt. Durch die symmetrische Ausbildung wird erreicht, dass die Pressbleche unabhängig ihrer Lagerorientierung sowohl unten als auch oben eingesetzt werden können, ohne dass eine Fehlpressung infolge falsch montierter Pressbleche erfolgen kann.

Die Erfindung wird im Nachfolgenden anhand der Zeichnungsfiguren erläutert.

Es zeigt
- Fig. 1: in einer perspektivischen Ansicht eine Werkstoffplatte,
- Fig. 2: in einer perspektivischen Explosionsdarstellung die Werkstoffplatte mit Einzelteilen und einem deckungsgenau- en Druckdekor und
- Fig. 3: in einer Draufsicht ein symmetrisches Pressblech zur Her- stellung der Werkstoffplatten.

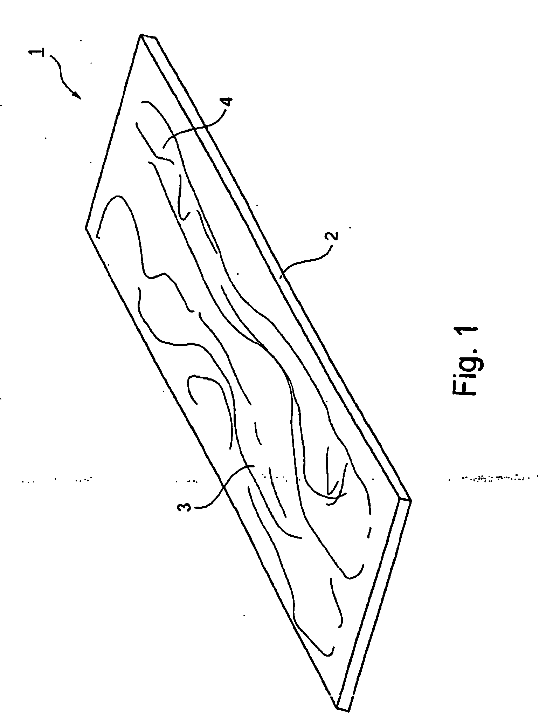

Figur 1 zeigt in einer perspektivischen Ansicht eine Werkstoffplatte 1, die aus einer mittleren Substratschicht 2 und zumindest einer auf der Oberseite aufliegenden Dekorschicht 3 besteht. Im gezeigten Ausführungsbeispiel wird für die Dekorschicht 3 beispielhaft ein Holzdekor 4 dargestellt. Selbstverständlich besteht die Möglichkeit jedes beliebige Dekor für diese Ausführungsvariante einer Werkstoffplatte 1 zu verwenden.

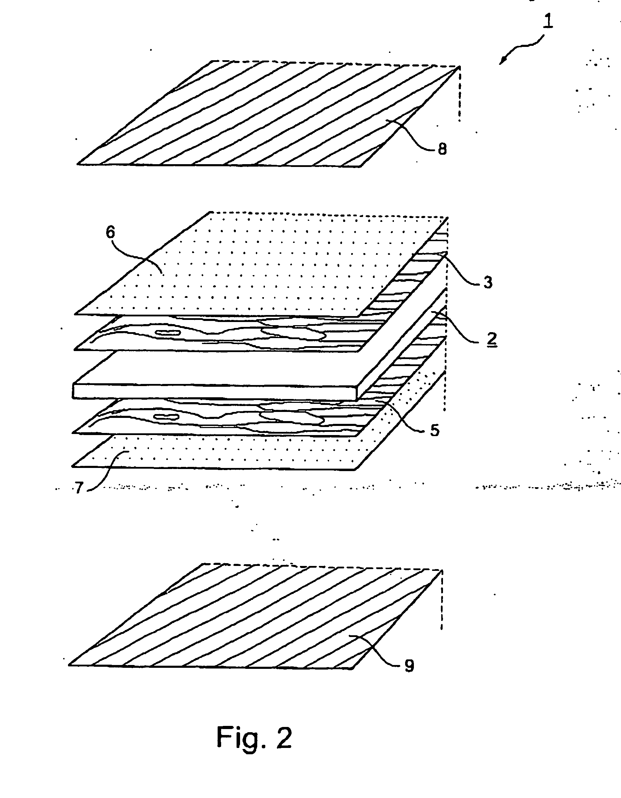

Figur 2 zeigt in einer perspektivischen Explosionsdarstellung die Werkstoffplatte 1 gemäß Figur 1. Aus dieser Darstellung ist ersichtlich, dass die Werkstoffplatte 1 aus einer mittleren Substratschicht 2 besteht, auf die zunächst eine Underlay-Schicht 14, 15, sowohl oberhalb als auch unterhalb aufgelegt werden. Im Anschluss daran folgt eine Dekorschicht 3, 5 und eine Overlay-Schicht 6, 7. Die Dekorschicht 3, 5 weist hierbei ein spiegelsymmetrisches Dekor auf, sodass nach Fertigstellung der Werkstoffplatte 1 der Eindruck einer Massivholzplatte entsteht. Die Dekorschicht 3, 5 selbst ist durch die Overlay-Schicht 6, 7 abgedeckt und führt in Folge der Erwärmung während des Pressvorganges zu einer festen dauerhaften Verbindung zwischen werlay-Schicht und Dekorschicht und ebenso zwischen Dekorschicht und Unterlay-Schicht 14, 1.5 sowie zwischen der Underlay-Schicht 14, 15 und der Substratschicht 2. Durch die Underlay-Schicht 14, 15 wird eine besonders-tiefe Prägung der Strukturen ermöglicht, während mit Hilfe der Overlay-Schicht 6, 7 gleichzeitig sichergestellt wird, dass die Oberfläche gegenüber Reinigungsmitteln etc. einen ausreichenden Schutz aufweist. Es besteht jedoch keine absolute Notwendigkeit die Overlay-Schichten 6, 7 oder gegebenenfalls weitere Overlay-Schichten 8, 9 vorzusehen, sofern dem Kundenwunsch entsprechend nur die Dekorschicht als äußere Schicht Verwendung finden soll.
   Des Weiteren besteht die Möglichkeit, dass die Reihe der einzelnen Schichtenfolge untereinander variiert wird, beispielsweise kann zunächst eine Leimschicht auf die Substratschicht 2 aufgelegt werden, sodann die Dekorschicht 3, 5 und anschießend eine Overlayschicht 6, 7 und 8, 9. Ferner könnten zwischen den einzelnen Schichten, soweit diese nicht selbst mit einem Aminoharz getränkt sind, Leimschichten angeordnet werden, welche die Verbindung nach Erwärmung und Aushärtung gewährleisten. Im vorliegenden Fall kommt es nicht so sehr auf die Art der Reihenfolge der einzelnen Schichten an, sondern viel mehr auf die Tatsache, dass die Dekorschicht, in welcher Position diese. auch immer in der Schichtenfolge eingebaut wird, einen deckungsgenauen Konturenverlauf aufweist.

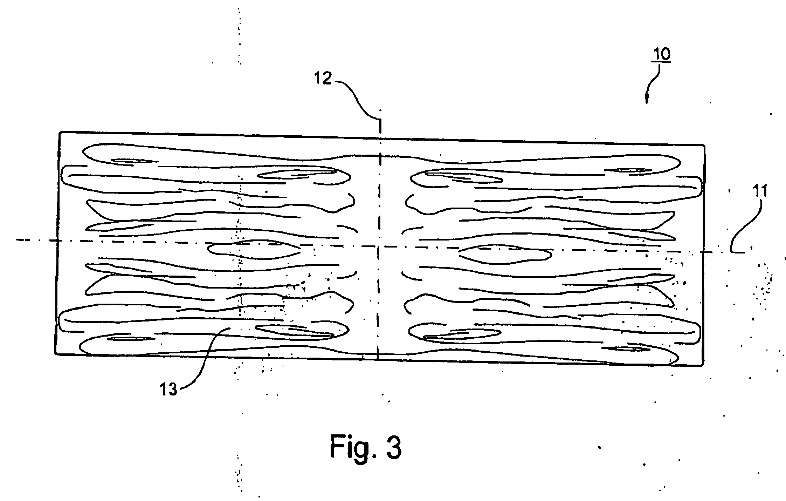

Figur 3 zeigt in einer Draufsicht ein symmetrisches Pressblech 10, welches entlang seiner Längsmittelachse 11 und Quermittelachse 12 eine symmetrische Struktur 13 aufweist. Die Struktur 13 ist hierbei in die jeweils anderen Quadranten gespiegelt worden, wodurch der wesentliche Vorteil entsteht, dass dieses Pressblech 10 in jeder beliebigen Lage sowohl als oberes oder unteres Pressblech verwendet werden kann, ohne dass die Gefahr besteht, dass die Strukturen nicht deckungsgenau übereinander bei der fertigen Werkstoffplatte ausgebildet sind.

### Bezugszeichenliste:

- 1: Werkstoffplatte
- 2: Substratschicht
- 3: Dekorschicht
- 4: Holzdekor
- 5: Dekorschicht
- 6: Overlayschicht
- 7: Overlayschicht
- 8: Overlayschicht
- 9: Overlayschicht
- 10: Pressblech
- 11: Längsmittelachse
- 12: Quermittelachse
- 13: Struktur
- 14: Undertay-Schicht
- 15: Underlay-Schicht

## Patentansprüche

1. Werkstoffplatte (1), insbesondere zur Herstellung von Möbeln, aufweisend zumindest eine mittlere Substratschicht (2) und eine Dekorschicht (3, 5) auf wenigstens einer Seite der Substratschicht (2),
**dadurch gekennzeichnet,**
**dass** zu beiden Seiten der herzustellenden Werkstoffplatte (1) eine Dekorschicht (3, 5) angeordnet und eine passagenaue Prägung vorhanden ist, wobei die Strukturen zu beiden Seiten der Werkstoffplatte (1) deckungsgenau ausgebildet sind.

2. Werkstoffplatte (1) nach Anspruch 1,
**dadurch gekennzeichnet.**
**dass** die Dekorschicht (3, 5) zumindest aus einem Dekorpapier und einer Prägung auf der Vorder- und Rückseite der Werkstoffplatte (1) besteht.

3. Werkstoffplatte (1) nach Anspruch 1 oder 2,
**dadurch gekennzeichnet,**
**dass** das Dekorpapier und die Prägung von der Mitte ausgehend zur Längs- und/oder Querrichtung eine symmetrische Struktur (13) aufweisen.

4. Werkstoffplatte (1) nach Anspruch 1, 2 oder 3,
**dadurch gekennzeichnet,**
**dass** zwischen der Substratschicht (2) und der Dekorschicht (3, 5) zumindest auf einer Seite, vorzugsweise auf beiden Seiten, eine Leimschicht angeordnet ist.

5. Werkstoffplatte (1) nach Anspruch 1 bis 4,
**dadurch gekennzeichnet,**
**dass** zwischen der Substratschicht (2) und der Dekorschicht (3, 5) zumindest auf einer Seite, vorzugsweise auf beiden Seiten, eine Underlay-Schicht (14, 15) angeordnet ist.

6. Werkstoffplatte (1) nach Anspruch 1 bis 5,
**dadurch gekennzeichnet,**
**dass** die Dekorschichten (3, 5) und/oder Overlayschichten (6, 7, 8, 9) abriebfeste Partikel aufweisen.

7. Werkstoffplatte (1) nach Anspruch 1 bis 6,
**dadurch gekennzeichnet,**
**dass** auf beiden Seiten der Werkstoffplatte (1) zumindest eine Schichtenfolge Overlayschicht (6, 7, 8, 9), Dekorschicht (3) und Underlay-Schicht (14, 15) vorgesehen ist.

8. Werkstoffplatte (1) nach Anspruch 1 bis 7,
**dadurch gekennzeichnet,**
**dass** die Overlayschichten (6, 7, 8, 9) transparent ausgebildet sind.

9. Werkstoffplatte (1) nach Anspruch 1 bis 8,
**dadurch gekennzeichnet,**
**dass** die Werkstoffplatte (1) aus faserhaltigen Materialien wie MDF, HDF, Span, OSB oder Sperrholz besteht.

10. Pressblech zur Herstellung einer Werkstoffplatte mit einer zur Längs- und/oder Querrichtung symmetrisch ausgebildeten Struktur,
**dadurch gekennzeichnet,**
**dass** das Pressblech entlang seiner Längsmittelachse und Quermittelachse eine in die Quadranten gespiegelte Oberflächenstruktur in Form einer Holzmaserung oder Gesteinsoberfläche aufweist, wobei ein Negativabdruck zur Prägung einer Oberfläche der Werkstoffplatte vorliegt.

## Claims

1. Material plate (1), in particular for the manufacture of furniture, comprising at least one central substrate layer (2) and one decorative layer (3, 5) on at least one side of the substrate layer (2),
**characterized in that**
on both sides of the material plate (1) to be manufactured, one decorative layer (3, 5) is disposed and an exactly fitting embossment is present, wherein the structures on both sides of the material plate (1) are embodied to be congruent.

2. Material plate (1) according to claim 1,
**characterized in that**
the decorative layer (3, 5) consists at least of a decorative paper and an embossment on the front and rear sides of the material plate (1).

3. Material plate (1) according to claim 1 or 2,
**characterized in that**
the decorative paper and the embossment comprise a symmetric structure (13) starting from the centre to the longitudinal and/or transverse directions.

4. Material plate (1) according to claim 1, 2 or 3,
**characterized in that**
between the substrate layer (2) and the decorative layer (3, 5), at least on one side, preferably on both sides, a layer of glue is provided.

5. Material plate (1) according to claims 1 to 4,
**characterized in that**
between the substrate layer (2) and the decorative layer (3, 5), at least on one side, preferably on both sides, an underlay (14, 15) is provided.

6. Material plate (1) according to claims 1 to 5,
**characterized in that**
the decorative layers (3, 5) and/or overlays (6, 7, 8, 9) comprise abrasion-resistant particles.

7. Material plate (1) according to claims 1 to 6,
**characterized in that**
on both sides of the material plate (1), at least one layer sequence of overlay (6, 7, 8, 9), decorative layer (3) and underlay (14, 15) is provided.

8. Material plate (1) according to claims 1 to 7,
**characterized in that**
the overlays (6, 7, 8, 9) are transparent.

9. Material plate (1) according to claims 1 to 8,
**characterized in that**
the material plate (1) consists of fibrous materials, such as MDF, HDF, chip, OSB or plywood.

10. Pressing plate for the manufacture of a material plate with a structure embodied to be symmetric to the longitudinal and/or transverse directions,
**characterized in that**
the pressing plate comprises, along its longitudinal central axis and its transverse central axis, a surface structure mirrored into the quadrants in the form of a wood grain or stone surface, wherein a reversed print for embossing a surface of the material plate is present.

## Revendications

1. Plaque de matériau (1), en particulier pour la fabrication de meubles, présentant au moins une couche de substrat centrale (2) et une couche décorative (3, 5) sur au moins une face de la couche de substrat (2),
**caractérisée par le fait que**
sur les deux faces de la plaque de matériau (1) devant être fabriquée, une couche décorative (3, 5) est disposée et un grenage coordonné est présent, les structures étant formées avec une concordance exacte sur les deux faces de la plaque de matériau (1).

2. Plaque de matériau (1) selon la revendication 1,
**caractérisée par le fait que**
la couche décorative (3, 5) est constituée au moins d'un papier décoratif et d'un grenage sur la face avant et sur la face arrière de la plaque de matériau (1).

3. Plaque de matériau (1) selon la revendication 1 ou 2,
**caractérisée par le fait que**
le papier décoratif et le grenage présentent une structure symétrique (13) à partir du centre par rapport à la direction longitudinale et/ou transversale.

4. Plaque de matériau (1) selon la revendication 1 ou 3,
**caractérisée par le fait qu'**
une couche de colle est disposée entre la couche de substrat (2) et la couche décorative (3, 5) au moins sur une face, préférentiellement sur les deux faces.

5. Plaque de matériau (1) selon la revendication 1 à 4,
**caractérisée par le fait qu'**
une sous-couche (14, 15) est disposée entre la couche de substrat (2) et la couche décorative (3, 5) au moins sur une face, préférentiellement sur les deux faces.

6. Plaque de matériau (1) selon la revendication 1 à 5,
**caractérisée par le fait que**
les couches décoratives (3, 5) et/ou les couches de revêtement (6, 7, 8, 9) présentent des particules résistantes à l'abrasion.

7. Plaque de matériau (1) selon la revendication 1 à 6,
**caractérisée par le fait qu'**
au moins une suite de couches couche de revêtement (6, 7, 8, 9), couche décorative (3) et sous-couche (14, 15) est prévue sur les deux faces de la plaque de matériau (1).

8. Plaque de matériau (1) selon la revendication 1 à 7,
**caractérisée par le fait que**
les couches de revêtement (6, 7, 8, 9) sont formées de manière transparente.

9. Plaque de matériau (1) selon la revendication 1 à 8,
**caractérisée par le fait que**
la plaque de matériau (1) est constituée de matériaux fibreux comme les fibres à moyenne densité (MDF), les fibres à haute densité (HDF), l'aggloméré, les lamelles orientées (OSB) ou le contreplaqué.

10. Tôle emboutie pour la fabrication d'une plaque de matériau ayant une structure formée de manière symétrique par rapport à la direction longitudinale et/ou transversale,
**caractérisée par le fait que**
la tôle emboutie présente le long de son axe longitudinal médian et de son axe transversal médian une structure de surface dupliquée dans les quarts sous la forme de veinage ou de roche, une impression négative existant par rapport au grenage d'une surface de la plaque de matériau.
